(19)

Europäisches
Patentamt
European
Patent Office
Office européen
des brevets

(11) **EP 3 450 127 A1**

(12) **EUROPEAN PATENT APPLICATION**

(43) Date of publication:
**06.03.2019 Bulletin 2019/10**

(21) Application number: **17189027.0**

(22) Date of filing: **01.09.2017**

(51) Int Cl.:
**B29B 7/60** (2006.01)       **B29B 9/00** (2006.01)
**B29C 47/10** (2006.01)      **C08J 3/20** (2006.01)
**C08J 3/12** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Basell Polyolefine GmbH
50389 Wesseling (DE)**

(72) Inventors:
• **MALUCELLI, Decio
44122 Ferrara (IT)**

• **CONSALVI, Marco
44122 Ferrara (IT)**
• **MEIER, Gerhardus
Houston TX 77077-1928 (US)**
• **SCHUELLER, Ulf
64331 Weiterstadt (DE)**

(74) Representative: **Seelert, Stefan
Basell Polyolefine GmbH
Intellectual Property
Bldg. C657, 2nd floor
Industriepark Höchst
65926 Frankfurt am Main (DE)**

(54) **PROCESS FOR PREPARING A POLYOLEFIN COMPOSITION**

(57)     A process for preparing a polyolefin composition comprising supplying a bimodal or multimodal polyolefin in form of a polyolefin powder having an mass-median-diameter D50 in the range from 400 $\mu$m to 2500 $\mu$m and one or more additives to a mixing device, mixing the polyolefin powder and the additives at a temperature from 10°C to 120°C, transferring the mixture into a extruder device, melting and homogenizing the mixture within the extruder device to form a molten polyolefin composition, and pelletizing the molten polyolefin composition.

EP 3 450 127 A1

**Description**

FIELD OF THE INVENTION

The present disclosure provides a process for continuously preparing a polyolefin composition comprising bimodal or multimodal polyolefin. The present disclosure especially provides a process for continuously preparing a polyolefin composition comprising mixing a bimodal or multimodal polyolefin in form of a polyolefin powder having a mass-median-diameter D50 of the polyolefin particles in the range from 400 μm to 2500 μm and one or more additives in a mixing device without melting the polyolefin powder before transferring the mixture into an extruder device.

BACKGROUND OF THE INVENTION

Polyolefins are the most widely used commercial polymers. To achieve and maintain the desired properties, it is however essential that the polymers are equipped with additional substances. These so-called plastics additives are auxiliary compounds which significantly influence the properties of the polymers and make the polymers commercially useful, although the additives are only added in small quantities. The additives are usually combined with the polyolefins directly after their polymerization during the pelletizing step. A specific kind of additives, which can be added after the polymerization for being present in the polyolefin pelletizing step, are free radical generators such as peroxides. Free radical generators can be employed, for example, for modifying the molecular structure of the polyolefins.

Polyolefins with an outstanding combination of properties are so-called bimodal or multimodal polyolefins. These polymers are frequently prepared in a cascade of two or more polymerization reactors which usually have different polymerization conditions. The individual particles of the polyolefin powder obtained in such polymerization processes may vary strongly in their composition. Accordingly, particular efforts are needed to homogenize these polyolefins in the pelletizing step. For example, WO 2004/096523 A1 describes a particular extruder configuration for melting and homogenizing multimodal or bimodal polyolefins.

WO 2016/087566 A1 discloses a process for continuously preparing a polyolefin composition comprising polyolefin and one or more additives in which the polyolefin powder and additives may be first mixed in a mixing device and the mixture of polyolefin powder and additives is then transferred into an extruder device into which the polyolefin powder and additives are molten and homogenized and the formed molten polyolefin composition is finally pelletized. Preferred polyolefin powders for the process of WO 2016/087566 A1 have a mean particle diameter of from 150 to 250 μm.

Gas-phase olefin polymerization processes have the advantages that, due to the absence of liquid hydrocarbons, a quite simple process design is possible and a wide range of different olefins can be used as comonomer. However, to ensure a good operability of the polymerization process, relatively coarse catalyst particle are employed, resulting in polymer powders of particles having quite large diameters. In case of producing bimodal or multimodal polyolefins, these relatively large polymer particles increase the issue of achieving a good homogeneity in the final polymer product. The homogeneity of the material is particularly important for polymers designated for preparing films, especially blown films, or for the extrusion of pipes, because the presence of even small quantities of non-homogeneous material might result in gels. For improving the homogeneity of ethylene polymers, WO 2005/019280 A1 discloses a process for preparing broad molecular weight polyethylenes by polymerizing ethylene in the presence of a polymerization catalyst in two steps in two gas-phase reactors having different concentrations of hydrogen, where at least one of the gas-phase reactors is a gas-phase reactor in which the growing polymer particles flow upward through a first polymerization zone under fast fluidization or transport conditions, leave said first polymerization zone and enter a second polymerization zone through which they flow downward under the action of gravity, leave said downcomer and are reintroduced into the riser, thus establishing a circulation of polymer.

Nonetheless, the obtained bimodal or multimodal polyolefins not always have a sufficient combination of properties, especially in the production of blown films. For improving the melt characteristics of polyethylene resins, WO 2007/070121 A1 discloses a solid state process in which an ethylene copolymer resin powder is contacted with an effective amount of organic free radical initiator at a temperature above the initiation temperature of the organic free radical initiator and below the melting point of the ethylene copolymer resin until essentially all of the peroxide is decomposed. The modified polyethylene resins of WO 2007/070121 A1 are particularly useful for blown film applications where ease of extrusion and bubble stability are primary concerns. However, carrying out a modification of a polyolefin in a solid state process in larger scale requires specific equipment.

There is accordingly a need to overcome the disadvantages of the prior art and to provide a process which allows preparing polyolefin compositions comprising bimodal or multimodal polyolefin from polyolefin powders having an mass-median-diameter D50 of the polyolefin particles in the range from 400 μm to 2500 μm, where the polyolefin compositions have a superior combination of properties, including a good bubble stability and a low amount of gels when preparing blown films, and which can be carried out continuously in an economical manner.

SUMMARY OF THE INVENTION

The present disclosure provides a process for preparing a polyolefin composition comprising bimodal or multimodal polyolefin in an extruder device comprising the steps of

a) supplying a bimodal or multimodal polyolefin in form of a polyolefin powder having a mass-median-diameter D50 of the polyolefin particles in the range from 400 $\mu$m to 2500 $\mu$m to a mixing device;

b) supplying one or more additives to the mixing device;

c) mixing the polyolefin powder and the additives at a temperature in the range from 10°C to 120°C without melting the polyolefin powder to form a mixture;

d) transferring the mixture of polyolefin powder and additives from the mixing device into the extruder device;

e) melting and homogenizing the mixture of polyolefin powder and additives within the extruder device to form a molten polyolefin composition; and

f) pelletizing the molten polyolefin composition.

In some embodiments, one of the additives is an organic free radical initiator.
In some embodiments, the organic free radical initiator is an organic peroxide.
In some embodiments, the organic free radical initiator is 2,5-dimethyl-2,5-di(tert-butylperoxy)hexane, 3,6,9-triethyl-3,6,9-trimethyl-1,2,4,5,7,8-hexoxonane, or a representative of 3,6,9-trimethyl-3,6,9-tris(alkyl)-1,2,4,5,7,8-hexoxonanes in which the alkyl radical is propyl or ethyl.
In some embodiments, the organic free radical initiator is added in form of a mixture of the organic free radical initiator with a polyolefin powder.
In some embodiments, the polymerization catalyst is a Ziegler- or Ziegler-Natta-catalyst comprising the reaction product of an aluminum alkyl with a titanium compound supported on a magnesium halide.
In some embodiments, the mixing device is a paddle mixer comprising one or two horizontally orientated rotating shafts.
In some embodiments, the polyolefin powder is transferred from the mixing device to the extruder device by gravity.
In some embodiments, the polyolefin powder has been prepared in one or more gas-phase polymerization reactors.
In some embodiments, at least one of the gas-phase polymerization reactors is a multi-zone circulating reactor in which one polymerization zone is a riser, in which growing polymer particles flow upwards under fast fluidization or transport conditions, and the other polymerization zones are sub-zones of a downcomer, in which the growing polymer particles flow downward in a densified form, wherein the riser and the downcomer are interconnected and polymer particles leaving the riser enter the downcomer and polymer particles leaving the downcomer enter the riser, thus establishing a circulation of polymer particles through the riser and the downcomer.
In some embodiments, the polyolefin powder is obtained by polymerizing one or more 1-olefins in a cascade of at least two polymerization reactors.
In some embodiments, the polyolefin is a polyethylene.
In some embodiments, the polyethylene is a high density polyethylene having a density determined according to ISO 1183 at 23°C from 0.945 to 965 g/cm$^3$.
In some embodiments, the extruder device is a continuous mixer with counter rotating twin rotors or the extruder device comprises at least one co-rotating twin screw extruder.

BRIEF DESCRIPTION OF THE DRAWINGS

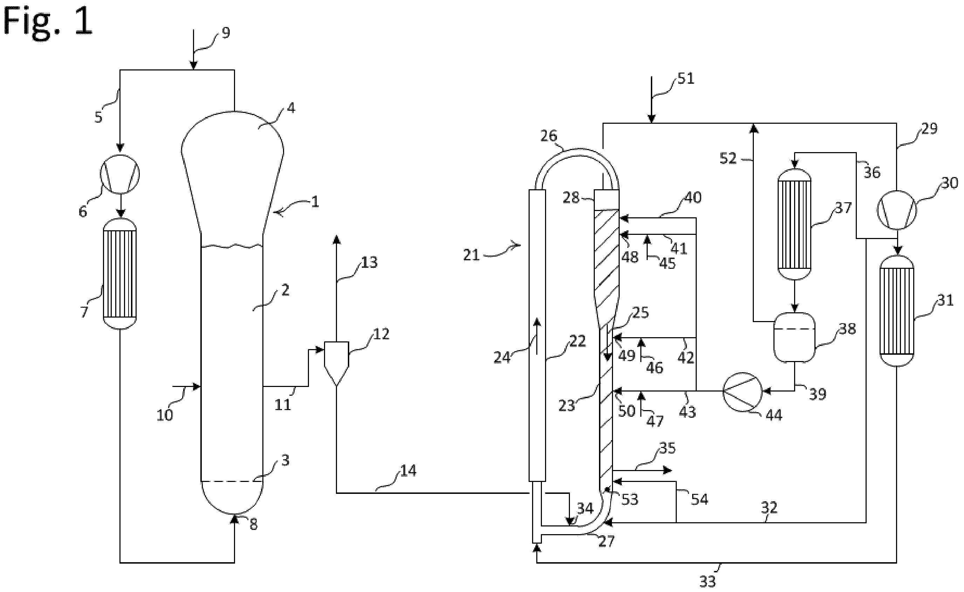

Figure 1 shows schematically a reactor set-up for preparing the bimodal or multimodal polyolefins employed in the process of the present disclosure.

DETAILED DESCRIPTION OF THE INVENTION

The present disclosure provides a process for preparing a polyolefin composition comprising bimodal or multimodal polyolefin and one or more additives. Suitable polyolefins are obtained by polymerizing olefins and especially by polymerizing 1-olefins, i.e. hydrocarbons having terminal double bonds, without being restricted thereto. Preference is given to nonpolar olefinic compounds, including aryl-substituted 1-olefins. Particularly preferred 1-olefins are linear or branched $C_2$-$C_{12}$-1-alkenes, in particular linear $C_2$-$C_{10}$-1-alkenes such as ethylene, propylene, 1-butene, 1-pentene, 1-hexene, 1-heptene, 1-octene, 1-decene or branched $C_2$-$C_{10}$-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process of the present disclosure may be a process for preparing polyolefin compositions comprising any kind of polyolefin and is in particular a process for preparing polyolefin compositions comprising polyolefins which were obtained by homopolymerization or copolymerization of ethylene or propylene. Preferred comonomers in propylene polymerization are up to 40 wt.% of ethylene, 1-butene and/or 1-hexene, and preferably from 0.5 wt.% to 35 wt.% of ethylene, 1-butene and/or 1-hexene.

In a preferred embodiment, the process of the present disclosure refers to preparing a polyolefin composition comprising polyolefins obtained by homopolymerizing or copolymerizing ethylene. Preferred comonomers in ethylene polymerization are up to 40 wt.% of $C_3$-$C_8$-1-alkenes, preferably 1-butene, 1-pentene, 1-hexene, 1-octene, or mixtures thereof. Particular preference is given to a process in which ethylene is copolymerized with from 0.01 wt.% to 20 wt.%, more preferably from 0.05 wt.% to 12 wt.% of one or more $C_3$-$C_8$-1-alkenes. Especially preferred comonomers for the copolymerization of ethylene are 1-hexene and/or 1-butene.

The polyolefins employed in the process of the present disclosure are bimodal or multimodal polyolefins. The terms "bimodal" and "multimodal" hereby refer to the modality of the molecular weight distribution. Such polymers can be obtained from polymerizing olefins in a cascade of two or more polymerization reactors under different reaction conditions or by employing mixed catalyst system comprising two or more types of polymerization catalysts which produce, under the same polymerization conditions, polyolefins of a different molecular weight. Thus, the "modality" indicates how many different polymerization conditions were utilized in preparing the polyolefin, independently whether this modality of the molecular weight distribution can be recognized as separated maxima in a gel permeation chromatography (GPC) curve or not, or how many different types of polymerization catalysts are comprised in a mixed polymerization catalyst system. Frequently used in the art, and also used herein, the term multimodal can include bimodal. In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the reactor cascade and so prepare narrow molecular weight polyolefin polymers. A complication in producing multimodal polyolefins in a cascade of polymerization reactors operating at different reaction conditions is however that, caused by different residence times of individual polyolefin particles in the different reactor, the composition of the individual polyolefin particles of a polyolefin powder may vary strongly.

All industrially known polymerization methods may be used for preparing the bimodal or multimodal polyolefins. These polymerization methods include solution processes, suspension processes, and gas-phase processes. The polymerization can be carried out batchwise or preferably continuously in two or more stages. Processes of this type are generally known to those skilled in the art. Among the polymerization processes mentioned, gas-phase polymerization, in particular in gas-phase fluidized-bed reactors or multi-zone circulating gas-phase reactors and suspension polymerization, in particular in loop reactors or stirred tank reactors are preferred.

In a preferred embodiment of the present disclosure, the polyolefin composition comprises bimodal or multimodal polyolefins which have been prepared in gas-phase. Preferably, the bimodal or multimodal polyolefins are prepared in a multi-zone circulating gas-phase reactor; or the bimodal or multimodal polyolefins are prepared in a reactor cascade of two or more gas-phase polymerization reactors, preferably a reactor cascade of two or more fluidized-bed reactors or a reactor cascade comprising a multi-zone circulating gas-phase reactor and one or more different gas-phase polymerization reactors, such as fluidized-bed reactors; or the bimodal or multimodal polyolefins are prepared in a cascade of first one or more suspension polymerization reactors, such as loop reactors, and subsequently one or more gas-phase polymerization reactors, such as fluidized-bed reactors.

Preferably, the apparatus for preparing the bimodal or multimodal polyolefins comprises a gas-phase polymerization reactor comprising a riser unit, in which growing polymer particles flow upwards under fluidization, fast fluidization or transport conditions, and a downcomer, in which growing polymer particles flow downward in a densified form.

The riser unit, in which the growing polymer particles flow upwards, may comprises a fluidized bed of growing polymer particles. The riser unit then operates as thoroughly mixed gas-phase reactor such as a fluidized bed reactor. Fluidized-bed reactors are reactors in which the polymerization takes place in a bed of polymer particles which is maintained in a fluidized state by feeding in a reaction gas mixture at the lower end of a reactor, usually below a gas distribution grid having the function of dispensing the gas flow, and taking off the gas again at its upper end. The reaction gas mixture is then returned to the lower end to the reactor via a recycle line equipped with a compressor and a heat exchanger for removing the heat of polymerization. The velocity of the reaction gas mixture has to be sufficiently high firstly to fluidize the mixed bed of finely divided polymer present in the tube serving as polymerization zone and secondly to remove the heat of polymerization effectively.

When a polymerization unit comprising a fluidized bed of growing polymer particles is employed as the riser unit, the downcomer may be positioned within, around or adjacent to the gas-phase reactor. It is also possible to employ two or more separated polymerization units, in which the growing polymer particles flow downward in a densified form, as the downcomer.

In an especially preferred embodiment of the present disclosure, the riser unit is a riser, in which an upward movement of growing polymer particles occurs under fast fluidization or transport conditions. Fast fluidization conditions inside the riser are established by feeding a reaction gas mixture at a velocity higher than the transport velocity of the polymer particles. The velocity of the reaction gas mixture is generally comprised between 0.5 and 15 m/s, preferably between 0.8 and 5 m/s. The terms "transport velocity" and "fast fluidization conditions" are well known in the art. For a definition of those terms see, for example, "D. Geldart, Gas Fluidization Technology, page 155 et seq., J. Wiley & Sons Ltd., 1986".

The part of the polymerization reactor in which the growing polymer particles flow downward in a densified form may be called a "downcomer" but may also be designated as a "moving bed" or a "settled bed" unit or reactor. The term "densified form" has to be understood in that the ratio between the mass of polymer and the reactor volume is higher than 80% of the "poured bulk density" of the resulting polymer. Thus, for instance, in the case of a polymer bulk density equal to 420 kg/m$^3$, a "densified form" implies that the polymer mass/reactor volume ratio is at least 336 kg/m$^3$. The "poured bulk density" of a polymer is a parameter well known to the person skilled in the art: it can be measured according to DIN EN ISO 60 : 1999. The density of solid inside the reactor is defined as the mass of polymer per volume of reactor occupied by the polymer.

Typically, a downcomer is a part of the polymerization reactor containing a bed of growing polymer particles, which moves downwards in a substantially plug flow mode. By "plug flow mode", it is meant that there is little or preferably no backmixing of the polymer particles.

For replacing reacted olefins and for controlling the gas flow within the downcomer, gaseous or liquid feed streams may be introduced at one or more positions into the downcomer. The feed streams preferably comprise ethylene and may further comprise one or more comonomers, inert components such as propane, or hydrogen. Depending on the amounts of added gaseous or liquid feed streams to the downcomer and the pressure conditions within the downcomer, the gaseous medium surrounding the polymer particles can be designed to move downwards concurrently with the polymer particles or upward countercurrently to the polymer particles. When feeding liquid streams to the downcomer, these liquid streams preferably vaporize within the downcomer, contributing to the composition of the reaction gas mixture within the downcomer. When operating the downcomer with more than one feed stream, the feeding points for introducing the feed streams into the downcomer are preferably evenly distributed over the height of the downcomer.

In a most preferred embodiment of the present disclosure, the gas-phase polymerization reactor is a multizone circulating reactor. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is preferably equipped with a compressor and a heat exchanger for removing the heat of polymerization. Preferably, a line for the catalyst feed is arranged on the riser and a polymer discharge system is located in the bottom portion of the downcomer. The introduction of make-up monomers, comonomers, hydrogen and/or inert components may occur at various points along the riser and the downcomer.

According to a preferred embodiment of the present disclosure, the reaction gas mixture leaving the riser unit is partially or totally prevented from entering the downcomer for establishing different polymerization conditions between the riser unit and at least a part of the downcomer. This can for example be achieved by feeding a barrier fluid in form of a gas and/or liquid mixture into the downcomer, preferably in the upper part of the downcomer. The barrier fluid should have a suitable composition, different from that of the gas mixture present in the riser unit. The amount of added barrier fluid can be adjusted in a way that an upward flow of gas countercurrent to the flow of the polymer particles is generated, particularly at the top thereof, acting as a barrier to the gas mixture entrained with the particles coming from the riser unit.

The barrier fluid preferably comes from a recycle gas stream and is more preferably obtained by partly condensing the stream. As a consequence, the barrier fluid may contain, besides the monomers to be polymerized, also inert compounds used as a polymerization diluent like nitrogen or alkanes having from 1 to 10 carbon atoms, hydrogen or other components of the reaction gas mixture.

The polymerization in the gas-phase polymerization reactor can also be carried out in a condensing or super-condensing mode, in which part of the circulating reaction gas mixture is cooled to below the dew point and returned to the reactor separately as a liquid and a gas-phase or together as a two-phase mixture in order to make additional use of the enthalpy of vaporization for cooling the reaction gas.

In a preferred embodiment of the present disclosure, the gas-phase polymerization reactor comprising the riser unit and the downcomer is part of a reactor cascade. The further polymerization reactors of the reactor cascade can be any kind of low-pressure polymerization reactors such as gas-phase reactors or suspension reactors. If the polymerization process of the reactor cascade includes a polymerization in suspension, the suspension polymerization is preferably carried out upstream of the gas-phase polymerization. Suitable reactors for carrying out such a suspension polymerization are for example loop reactors or stirred tank reactors. Suitable suspension media are inter alia inert hydrocarbons such as isobutane or mixtures of hydrocarbons or else the monomers themselves. Such additional polymerization stages, which are carried out in suspension, may also include a pre-polymerization stage. If the multistage polymerization of olefins comprises additional polymerization stages carried out in gas-phase, the additional gas-phase polymerization reactors can be any type of gas-phase reactors like horizontally or vertically stirred gas-phase reactors, fluidized-bed reactors or multizone circulating reactors. Such additional gas-phase polymerization reactors may be arranged downstream or upstream of the gas-phase polymerization reactor. In an especially preferred embodiment of the present disclosure, the gas-phase polymerization reactor comprising the riser unit and the downcomer is part of a reactor cascade in which a fluidized-bed polymerization reactor is arranged upstream of the gas-phase polymerization reactor.

Figure 1 shows schematically a set-up of a polymerization reactor cascade comprising a fluidized-bed reactor and a multizone circulating reactor for preparing the bimodal or multimodal polyolefins employed in the process of the present disclosure.

The first gas-phase reactor, fluidized-bed reactor (1), comprises a fluidized bed (2) of polyolefin particles, a gas distribution grid (3) and a velocity reduction zone (4). The velocity reduction zone (4) is generally of increased diameter compared to the diameter of the fluidized-bed portion of the reactor. The polyolefin bed is kept in a fluidization state by an upward flow of gas fed through the gas distribution grid (3) placed at the bottom portion of the reactor (1). The gaseous stream of the reaction gas mixture leaving the top of the velocity reduction zone (4) via recycle line (5) is compressed by compressor (6), transferred to a heat exchanger (7), in which it is cooled, and then recycled to the bottom of the fluidized-bed reactor (1) at a point below the gas distribution grid (3) at position (8). The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, inert condensable gases, such as alkanes, as well as inert non-condensable gases, such as nitrogen. Make-up monomers, hydrogen, and optional inert gases or process additives can be fed into the reactor (1) at various positions, for example via line (9) upstream of the compressor (6). Generally, the catalyst is fed into the reactor (1) via a line (10) that is preferably placed in the lower part of the fluidized bed (2).

The polyolefin particles obtained in fluidized-bed reactor (1) are discontinuously discharged via line (11) and fed to a solid/gas separator (12) in order to avoid that the gaseous mixture coming from the fluidized-bed reactor (1) enters the second gas-phase reactor. The gas leaving solid/gas separator (12) exits the reactor via line (13) as off-gas while the separated polyolefin particles are fed via line (14) to the second gas-phase reactor.

The second gas-phase reactor is a multizone circulating reactor (21) comprising a riser (22) and a downcomer (23) which are repeatedly passed by the polyolefin particles. Within riser (22), the polyolefin particles flow upward under fast fluidization conditions along the direction of arrow (24). Within the downcomer (23) the polyolefin particles flow downward under the action of gravity along the direction of the arrow (25). The riser (22) and the downcomer (23) are appropriately interconnected by the interconnection bends (26) and (27).

After flowing through the riser (22), the polyolefin particles and the reaction gas mixture leave riser (22) and are conveyed to a solid/gas separation zone (28). This solid/gas separation can be effected by using conventional separation means such as, for example, a centrifugal separator like a cyclone. From the separation zone (28) the polyolefin particles enter downcomer (23).

The reaction gas mixture leaving the separation zone (28) is recycled to the riser (22) by means of a recycle line (29), equipped with a compressor (30) and a heat exchanger (31). Between the compressor (30) and the heat exchanger (31), the recycle line (29) splits and the gaseous mixture is divided into two separated streams: line (32) conveys a part of the recycle gas into the interconnection bend (27), while line (33) conveys another part the recycle gas to the bottom of riser (22), so as to establish fast fluidization conditions therein.

The polyolefin particles coming from the first gas-phase reactor via line (14) enter the multizone circulating reactor (21) at the interconnection bend (27) in position (34). The polyolefin particles obtained in multizone circulating reactor (21) are continuously discharged from the bottom part of downcomer (23) via the discharge line (35).

A part of the gaseous mixture leaving the separation zone (28) exits the recycle line (29) after having passed the compressor (30) and is sent through line (36) to the heat exchanger (37), where it is cooled to a temperature at which the monomers and the optional inert gas are partially condensed. A separating vessel (38) is placed downstream of the heat exchanger (37). The separated liquid is withdrawn from the separating vessel (38) via line (39) and fed to downcomer (23) through lines (40), (41), (42) and (43) by means of a pump (44), wherein the feed stream introduced via line (40) is supplied to generate the barrier for preventing the reaction gas mixture of the riser (22) from entering the downcomer (23). Make-up monomers, make-up comonomers, and optionally inert gases and/or process additives can be introduced via lines (45), (46) and (47) into lines (41), (42) and (43) and then fed into the downcomer (23) at monomer feeding points (48), (49) and (50). Make-up monomers, make-up comonomers, and optionally inert gases and/or process additives can further be introduced into the recycle line (29) via line (51). The gaseous mixture obtained as gas-phase in the separating vessel (38) is recirculated to recycle line (29) through line (52).

The bottom of the downcomer (23) is equipped with a control valve (53) having an adjustable opening for adjusting the flow of polyolefin particles from downcomer (23) through the interconnection bend (27) into the riser (22). Above the control valve (53), amounts of a recycle gas mixture coming from the recycle line (29) through line (54) are introduced into the downcomer (23) to facilitate the flow of the polyolefin particles through the control valve (53).

The polymerization for preparing the bimodal or multimodal polyolefins of the present disclosure can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. The preparation and use of these catalysts for olefin polymerization are generally known. In a preferred embodiment of the present disclosure, the polymerization catalyst is a Ziegler- or Ziegler-Natta-catalyst comprising the reaction product of an aluminum alkyl with a titanium compound supported on a magnesium halide.

The bimodal or multimodal polyolefins employed in the process of the present disclosure have been obtained in the polymerization in form of a polyolefin powder, that means in form of relatively small particles. The mass-median-diameter D50 of these polyolefin particles is in the range from 400 $\mu$m to 2500 $\mu$m, preferably from 600 $\mu$m to 2300 $\mu$m, and more preferably from 800 $\mu$m to 2100 $\mu$m, determined by dry sieving analysis according to DIN 53477 (November 1992).

Preferred polyolefins for being employed in the process of the present disclosure are polyethylenes having a density from 0.90 g/cm$^3$ to 0.97 g/cm$^3$. Preferably the density is in the range of from 0.920 to 0.968 g/cm$^3$ and especially in the range of from 0.945 to 0.965 g/cm$^3$. The density has to be understood as being the density determined according to DIN EN ISO 1183-1:2004, Method A (Immersion) with compression molded plaques of 2 mm thickness which were pressed at 180°C, 20MPa for 8 minutes with subsequent crystallization in boiling water for 30 minutes.

Preferably the polyolefins for being employed in the process of the present disclosure are polyethylenes having a melt flow rate MFR$_{21.6}$ at 190°C under a load of 21.6 kg, determined according to DIN EN ISO 1133:2005 condition G, from 0.5 to 300 g/10 min, more preferably from 1 to 100 g/10 min, even more preferably from 1.2 to 100 g/10 min and especially from 1.5 to 50 g/10 min.

The polyolefin compositions of the present disclosure are prepared in an extruder device. Suitable extruder devices for the process of the present disclosure are extruders or continuous mixers. These extruders or mixers can be single- or two-stage machines which melt and homogenize the polyethylene composition. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating twin rotor or the extruder device comprises at least one co-rotating twin screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

In the process for preparing the polyolefin compositions according to the present disclosure, as step a), the bimodal or multimodal polyolefin is supplied in form of a polyolefin powder to a mixing device. The mixing device can be any apparatus which allows dry-blending of particles. The mixing device can operate continuously or discontinuously. Preferably, the mixing device operates continuously.

Preferred dry-blending devices are paddle mixers comprising one or two horizontally orientated rotating shafts, more preferably two horizontally orientated counter-rotating shafts. The shafts are equipped with paddles of an appropriate geometry. The rotating shafts move the composition of polyolefin powder and additives horizontally along the axis of the shafts and at the same time mix the composition intensively. Such paddle mixers are commercially available, for example, from Köllemann GmbH, Adenau, Germany or J. Engelsmann AG, Ludwigshafen, Germany. Preferred mixing devices are further vertical batch mixer such a Henschel-Mixers® available from Zeppelin Systems GmbH, Kassel, Germany. Preferred dry-blending devices are also single screw conveyors equipped with blending elements. Preferably, such blending elements are amendable devices such as adjustable paddles or slotted flights to allow controlling the level of blending.

In step b) of the process of the present disclosure, one or more additives are supplied to the mixing device. Such additives are common in the art. Especially for multimodal polyolefins it is however essential that they are very uniformly distributed within the polyolefin. Suitable types of additives for preparing polyolefin compositions are, for example, antioxidants, melt stabilizers, light stabilizers, acid scavengers, lubricants, processing aids, antiblocking agents, slip agents, antistatics agents, antifogging agents, pigments or dyes, nucleating agents, flame retardants or fillers. It is common that several additives are added to the polyolefin compositions. The multiple additives can be different types of additives. It is however also possible that several representatives of one type of additives are added to one polyolefin composition. Additives of all these types are generally commercially available and are described, for example, in Hans Zweifel, Plastics Additives Handbook, 5th Edition, Munich, 2001.

In a preferred embodiment of the present disclosure, one of the additives is an organic free radical initiator. Free radical initiators are chemical compounds that can generate radical species by thermolysis. Examples of organic free radical initiator are azo compounds, organic hydroperoxides or organic peroxides. Preferably, one of the additives supplied to the mixing device is an organic peroxide. Examples of suitable organic peroxides are dicumyl peroxide, di-tert-butyl peroxide, tert-butylperoxybenzoate, 2,5-dimethyl-2,5-di(tert-butylperoxy)hexane, 3,6,9-triethyl-3,6,9-trimethyl-1,2,4,5,7,8-hexoxonane, representatives of 3,6,9-trimethyl-3,6,9-tris(alkyl)-1,2,4,5,7,8-hexoxonanes in which the alkyl radical is propyl or ethyl, tert-butyl peroxyneodecanoate, tert-amyl peroxypivalate, 1,3-bis(tert-butylperoxyisopropyl)benzene, and the like. Representative hydroperoxides include di-tert-butyl hydroperoxide, tert-butyl hydroperoxide and the like. Suitable azo compounds include 2,2'-azo-diisobutyronitrile, 2-phenylazo-2,4-dimethyl-4-methoxyl-valeronitrile, 2,2'-azobis(N-butyl-2-methylpropionamide), and the like. Preferably, the organic free radical initiator is 2,5-dimethyl-2,5-di(tert-butylperoxy)hexane, 3,6,9-triethyl-3,6,9-trimethyl-1,2,4,5,7,8-hexoxonane, or a representative of 3,6,9-trimethyl-3,6,9-tris(alkyl)-1,2,4,5,7,8-hexoxonanes in which the alkyl radical is propyl or ethyl.

In a preferred embodiment of the present disclosure, the organic free radical initiator is employed in form of a polyolefin mixture, which is preferably prepared by adding the organic free radical initiator in pure form or as a solution in a diluent like a hydrocarbon to a polyolefin powder. Preferred polyolefin mixtures have a content of the organic free radical initiator in the polyolefin mixture in the range from 0.5 to 25 wt.%, preferably from 1 to 20 wt.%, and more preferably from 2 to 10 wt.%.

Preferably, the amount of added organic free radical initiator corresponds to a content of initiator in the final polyethylene composition of from 1 to 200 ppm by weight, more preferably from 2 to 150 ppm by weight, and in particular from 3 to 120 ppm by weight.

Step c) of the process of the present disclosure provides mixing the polyolefin powder and the additives at a temperature in the range from 10°C to 120°C without melting the polyolefin powder. Preferably, the mixing of step c) is carried at a temperature in the range from 20°C to 100°C (???), more preferably from 30 °C to 90 °C.

The mixture of polyolefin powder and additives is then transferred in step d) from the mixing device into the extruder device. Preferably, the mixture of polyolefin powder and additives is transferred to a hopper of the extruder device and then introduced from the hopper into the extruder device. Preferably, the transfer of the mixture of polyolefin powder and additives into the extruder device occurs by gravity.

Within the extruder device, in step e), the mixture of polyolefin powder and additives is melted and homogenized to form a molten polyolefin composition. This occurs preferably by applying heat and mechanical energy to the mixture of polyolefin powder and additives. Step e) results in a homogenization of the polyolefin melt as such and also provides a uniform distribution of the additives within the polyolefin melt.

Subsequent step f) of the process of the present disclosure provides pelletizing the molten polyolefin composition comprising the bimodal or multimodal polyolefin and the additives. Step f) accordingly transforms the molten polyolefin composition into pellets.

The process of the present disclosure allows preparing polyolefin compositions comprising bimodal or multimodal polyolefin from polyolefin powders having a mass-median-diameter D50 of the polyolefin particles in the range from 400 $\mu$m to 2500 $\mu$m which have a superior combination of properties, including a good bubble stability and a low amount of gels when preparing blown films. Furthermore, the process can be carried out continuously in an economical manner.

EXAMPLES

The melt flow rate $MFR_{21.6}$ was determined according to DIN EN ISO 1133-1:2012-03 at a temperature of 190 °C under a load of 21.6 kg.

The melt flow rate $MFR_5$ was determined according to DIN EN ISO 1133-1:2012-03 at a temperature of 190 °C under a load of 5 kg.

The melt flow rate $MFR_{2.16}$ was determined according to DIN EN ISO 1133-1:2012-03 at a temperature of 190 °C under a load of 2.16 kg.

The Flow Rate Ratio FRR is the ratio of $MFR_{21.6}$ / $MFR_5$.

The density was determined according to DIN EN ISO 1183-1:2004, Method A (Immersion) with compression molded plaques of 2.5 mm thickness. The compression molded plaques were prepared with a defined thermal history from pelletized material: pressed using flash-mold at 180 °C, 4 min in contact mode and 4 min at the same temperature with 20 MPa, with subsequent crystallization in boiling water for 30 min, cooling in room temperature for 30 min and finally tempering at 23.0 +/-0.1 °C for 30 min.

The gel count was determined by preparing a cast film, analyzing the film defects by means of an optical scanning device and classifying and counting the film defects according to their size (circle diameter). The films were prepared by an extruder (type ME20) equipped with a chill roll and winder, model CR-9, and analyzed by an optical film surface analyzer with flash camera system, model FTA100 (all components produced by OCS Optical Control Systems GmbH, Witten, Germany). The apparatus had the following characteristics

- screw diameter: 20 mm;
- screw length: 25 D;
- compression ratio: 3:1;
- screw layout 25 D: 10 D feeding, 3 D compression, 12 D metering;
- die width (slit die): 150 mm;
- resolution: 26 $\mu$m x 26 $\mu$m;
  and was operated under the following conditions
- T 1 230°C;
- T 2 230°C;
- T 3 230°C;
- T 4 (adapter) 230°C;
- T 5 (die) 230°C;
- take off speed 3.0 m/min;
- screw speed to be adjusted to film thickness 50 $\mu$m;
- throughput 1.0 to 1.5 kg/h (target 1.15 kg/h);
- air shower on - 5 $m^3$/h,
- chill roll temperature 50°C;
- vab chill roll 4 N;
- winding tensile force 4 N,
- draw off strength 5 N;
- camera threshold threshold 1: 75% - threshold 2: 65%.

For starting the measurement, extruder and take off unit were set to the specified conditions and started with a material having a known gel level. The film inspection software was started when the extruder showed steady conditions of temperature and melt pressure. After having operated the extruder with the starting material for at least half an hour or after the gel count having reached the known gel level, the first sample to measure was fed to the extruder. After having reached a stable gel level for 45 minutes the counting process was started until the camera had inspected an area of at least 3 $m^2$ of film. Thereafter the next sample was fed to the extruder and after having reached again a stable gel count for 45 minutes the counting process for the next sample was started. The counting process was set for all samples in a way that the camera inspected an area of at least 3 $m^2$ of film and the number of measured defects per size-class was normalized to 1 $m^2$ of film.

For determining the rheological polydispersity (ER), rheological measurements were carried out in a parallel plate rotational rheometer (MCR 300, Anton Paar GmbH, Ostfildern, Germany) with 25mm diameter plates at T = 190 °C. Samples are prepared in a melt-press at 200 °C under a pressure of 20 MPa for 4 min, resulting in a plate of 1 mm thickness from which 25 mm diameter discs were stamped out and inserted in the rheometer. The measurements were performed in dynamic oscillatory shear mode as a so-called "frequency-sweep", measuring at frequencies from 620 to 0.02 rad/s under constant strain amplitude of 5%.

ER was determined by the method of R. Shroff and H. Mavridis, "New Measures of Polydispersity from Rheological Data on Polymer Melts," J. Applied Polymer Science 57 (1995) 1605 (see also U.S. Pat. No. 5,534,472 at Column 10, lines 20-30). Storage modulus (G') and loss modulus (G") were measured. The nine lowest frequency points were used (five points per frequency decade) and a linear equation was fitted by least-squares regression to log G' versus log G". ER was then calculated from:

$$ER = (1.781*10^{-3})*G'$$

at a value of G''=5,000 dyn/cm$^2$.

As those skilled in the art will recognize, when the lowest G'' value is greater than 5,000 dyn/cm$^2$, the determination of ER involves extrapolation. The ER values calculated then will depend on the degree on nonlinearity in the log G' versus log G'' plot. The temperature, plate diameter and frequency range are selected such that, within the resolution of the rheometer, the lowest G'' value is close to or less than 5,000 dyn/cm$^2$.

The determination of the particle size distribution of the produced polyethylene powder was carried out by dry sieving analysis according to DIN 53477 (November 1992) using a AS 200 control vibratory sieve shaker (Retsch GmbH, Haan, Germany) with a set of 7 calibrated sieves (125 $\mu$m, 250 $\mu$m, 500 $\mu$m, 710 $\mu$m, 1000 $\mu$m, 1400 $\mu$m, and 2000 $\mu$m). The mass-median-diameter D50 of the polyolefin particles was obtained by calculating the particle size distribution using the software Easy Sieve 4.0 of the apparatus, after weighting the fractions on each sieve.

Example 1

A polyethylene was prepared in a cascade of a fluidized-bed reactor and a multizone circulating reactor (MZCR) having two interconnected reaction zones as shown in Figure 1.

10 g/h of a Ziegler-Natta catalyst, which was prepared according to example 1a of WO 2014/202420 A1 with a molar feed ratio of electron donor/Ti of 8, were fed using 5 kg/h of liquid propane to a first stirred precontacting vessel, into which additionally triisobutylaluminum (TIBA), diethylaluminum chloride (DEAC) and tetrahydrofuran (THF) were dosed. The weight ratio of triisobutylaluminum to diethylaluminum chloride was 7:1. The weight ratio of the aluminum alkyls to the catalyst solid was 5:1. The weight ratio of the aluminum alkyls to THF was 70:1. The first precontacting vessel was kept at 50°C with a residence time of 30 minutes. The catalyst suspension of the first precontacting vessel was continuously transferred to a second stirred precontacting vessel, which was operated with a residence time of 30 minutes and kept at 50°C. The catalyst suspension was then transferred continuously to a fluidized-bed reactor (1) via line (10).

In the fluidized-bed reactor (1), ethylene was polymerized in the presence of propane as an inert diluent using hydrogen as molecular weight regulator. 48 kg/h of ethylene and 290 g/h of hydrogen were fed to the fluidized-bed reactor (1) via line (9). No comonomer was added. The polymerization was carried out at a temperature of 80°C and a pressure of 2.9 MPa.

The polyethylene obtained in the fluidized-bed reactor (1) had an MFR$_{2.16}$ of 80 g/10 min and a density of 0.967 g/cm$^3$.

The polyethylene obtained in the fluidized-bed reactor (1) was continuously transferred to a multizone circulating reactor (21), which was operated at a pressure of 2.5 MPa and a temperature of 80°C measured at the beginning of line (29) where the reaction gas mixture has just left separation zone (28). The riser (22) had an internal diameter of 200 mm and a length of 19 m. The downcomer (23) had a total length of 18 m, divided into an upper part of 5 m with an internal diameter of 300 mm, a lower part of 13 m with an internal diameter of 150 mm and in-between the upper part and the lower part a conical part having a length of 0.43 m. The final polymer was discontinuously discharged via line (35).

50 kg/h of a liquid stream were fed as barrier fluid into the upper part of the downcomer (23) via line (40). The liquid for generating the barrier originated from partially condensing recycle gas mixture in heat exchanger (37) at working conditions of 60°C and 2.5 MPa and separating liquid and gaseous components in separating vessel (38). The liquid barrier fluid had a composition that the gas produced by vaporizing the barrier fluid had 6.5 vol.% ethylene, 0.1 vol.% hydrogen, 0.6 vol.% 1-hexene and 92.8 vol.% propane.

Additional monomers were fed to the downcomer at three monomer feeding points below the barrier. The combined quantity of fresh monomers fed into the downcomer (23) were 20 kg/h of ethylene and 1.5 kg/h of 1-hexene. Additionally, 5 kg/h of propane, 24 kg/h of ethylene and 2 g/h of hydrogen were fed through line (51) into the recycle line (29).

Of the final polyethylene powder produced in the cascade of the fluidized-bed reactor (1) and the multizone circulating reactor (21), 51 % by weight were produced in the fluidized-bed reactor (1) and 49 % by weight were produced in the multizone circulating reactor (21).

The final polyethylene powder has a mass-median-diameter D50 of 1485 $\mu$m.

Before being fed to the hopper of a LCM80H continuous mixer (Kobe Steel, Ltd., Japan), the final polyethylene powder produced in the cascade of the fluidized-bed reactor (1) and the multizone circulating reactor (21) was intimately mixed with the additives Irganox 1010 (supplied by BASF SE, Ludwigshafen, Germany), Irgafos 168 (supplied by BASF SE, Ludwigshafen, Germany), and calcium stearate (Ligastar CA 800, supplied by Peter Greven GmbH & Co. KG, Bad Münstereifel, Germany) in a vertical batch mixer (HU 350; Zeppelin Systems GmbH, Kassel, Germany). The amounts of added additives correspond to a content of additives in the final polyethylene composition of 1800 ppm by weight Irganox 1010, 1200 ppm by weight Irgafos 168, and 1000 ppm by weight calcium stearate.

The pelletization conditions and the gel count and the rheological polydispersity (ER) of the prepared polyethylene composition are indicated in Table 1.

Comparative Example A

A polyethylene composition having a content of additives in the final polyethylene composition of 1800 ppm by weight Irganox 1010, 1200 ppm by weight Irgafos 168 and 1000 ppm by weight calcium stearate was prepared from the final polyethylene powder obtained in Example 1 under the same conditions as in Example 1, except that the polyethylene powder and the additives were separately fed to the hopper of the LCM80H continuous mixer.

The pelletization conditions and the gel count and the rheological polydispersity (ER) of the prepared polyethylene composition are indicated in Table 1.

Table 1

|  | Example 1 | Comparative Example A |
|---|---|---|
| Pelletization rate [kg/h] | 140 | 140 |
| Rotor speed [rpm] | 360 | 360 |
| Gate temperature [°C] | 232 | 229 |
| Specific energy [kWh/t] | 280 | 283 |
| **PE Composition** | | |
| $MFR_5$ [g/10min] | 0.21 | 0.20 |
| FRR | 35.2 | 35.5 |
| Gel count > 450 $\mu$m [$1/m^2$] | 76 | 744 |
| Gel count > 700 $\mu$m [$1/m^2$] | 14 | 87 |
| ER | 2.6 | 3.7 |

The comparison between Example 1 and Comparative Example A shows that by premixing the polyolefin powder and the additives, the amount of gels in the prepared polyolefin composition is significantly reduced. Furthermore, the rheological polydispersity (ER) is lower, indicating that an undesired cross-linking of polymer chains is avoided.

Example 2

The polymerization of Example 1 was repeated under identical conditions except that the combined quantity of fresh monomers fed into the downcomer (23) were 18 kg/h of ethylene and 0.9 kg/h of 1-hexene and that 30 kg/h of ethylene and 2 g/h of hydrogen were fed through the line (48) into the recycle line (29).

Of the final polyethylene powder produced in the cascade of the fluidized-bed reactor (1) and the multizone circulating reactor (21), 49 % by weight were produced in the fluidized-bed reactor (1) and 51 % by weight were produced in the multizone circulating reactor (21).

The final polyethylene powder has a mass-median-diameter D50 of 1549 $\mu$m.

Before being fed to the hopper of a ZSK58 twin screw extruder (Coperion GmbH, Stuttgart, Germany), the final polyethylene powder produced in the cascade of the fluidized-bed reactor (1) and the multizone circulating reactor (21) was intimately mixed with the additives Irganox 1010 (supplied by BASF SE, Ludwigshafen, Germany), Irgafos 168 (supplied by BASF SE, Ludwigshafen, Germany), calcium stearate (Ligastar CA 800, supplied by Peter Greven GmbH & Co. KG, Bad Münstereifel, Germany), and 7.5 wt.% mixture of 2,5-dimethyl-2,5-di-(tert.-butyl-peroxy)-hexane with polypropylene (PERGAPROP HX-7.5 PP, supplied by PERGAN GmbH, Bocholt, Germany) in a vertical batch mixer (HU 350; Zeppelin Systems GmbH, Kassel, Germany). The amounts of added additives correspond to a content of additives in the final polyethylene composition of 800 ppm by weight Irganox 1010, 800 ppm by weight Irgafos 168, 1400 ppm by weight calcium stearate, and 80 ppm by weight PERGAPROP HX-7.5 PP.

The pelletization conditions and the gel count and the rheological polydispersity (ER) of the prepared polyethylene composition are indicated in Table 2.

Comparative Example B

Example 2 was repeated except that no peroxide was added. The amounts of added additives correspond to a content of additives in the final polyethylene composition of 800 ppm by weight Irganox 1010, 800 ppm by weight Irgafos 168, and 1400 ppm by weight calcium stearate

The pelletization conditions and the gel count and the rheological polydispersity (ER) of the prepared polyethylene composition are indicated in Table 2.

Comparative Example C

A polyethylene composition having a content of additives in the final polyethylene composition of 800 ppm by weight Irganox 1010, 800 ppm by weight Irgafos 168, 1400 ppm by weight calcium stearate, and 80 ppm by weight PERGAPROP HX-7.5 PP was prepared from the final polyethylene powder obtained in Example 2 under the same conditions as in Example 2, except that the polyethylene powder and the additives, including the mixture of peroxide and polypropylene, were separately fed to the hopper of the ZSK58 twin screw extruder.

The pelletization conditions and the gel count and the rheological polydispersity (ER) of the prepared polyethylene composition are indicated in Table 2.

Table 2

|  | Example 2 | Comparative Example B | Comparative Example C |
|---|---|---|---|
| Pelletization rate [kg/h] | 165 | 165 | 165 |
| Screw speed [rpm] | 240 | 240 | 240 |
| Throttle valve position [°] | 0 | 0 | 0 |
| Specific energy [kWh/t] | 259 | 261 | 260 |
| **PE Composition** |  |  |  |
| $MFR_5$ [g/10min] | 0.17 | 0.18 | 0.17 |
| FRR | 31.2 | 28.9 | 31.8 |
| Gel count > 450 $\mu$m [$1/m^2$] | 33 | 12 | 145 |
| Gel count > 700 $\mu$m [$1/m^2$] | 7 | 2 | 33 |
| ER | 3.36 | 2.82 | 3.51 |

The comparison between Example 2 and Comparative Example B shows that by adding peroxide, an intended cross-linking of polymer chains can be induced. A relatively small increase in gels cannot be avoided. However, the comparison between Example 2 and Comparative Example C shows that without premixing of the polyolefin powder and the additives, including the mixture of peroxide and polypropylene, the amount of gels in the prepared polyolefin composition significantly increases by adding small amounts of peroxide.

**Claims**

**1.** A process for preparing a polyolefin composition comprising bimodal or multimodal polyolefin in an extruder device comprising the steps of

a) supplying a bimodal or multimodal polyolefin in form of a polyolefin powder having a mass-median-diameter D50 of the polyolefin particles in the range from 400 $\mu$m to 2500 $\mu$m to a mixing device;
b) supplying one or more additives to the mixing device;
c) mixing the polyolefin powder and the additives at a temperature in the range from 10°C to 120°C without melting the polyolefin powder to form a mixture;
d) transferring the mixture of polyolefin powder and additives from the mixing device into the extruder device;
e) melting and homogenizing the mixture of polyolefin powder and additives within the extruder device to form a molten polyolefin composition; and
f) pelletizing the molten polyolefin composition.

2. The process of claim 1, wherein one of the additives is an organic free radical initiator.

3. The process of claim 2, wherein the organic free radical initiator is an organic peroxide.

4. The process of claim 3, wherein the organic free radical initiator is 2,5-dimethyl-2,5-di(tert-butylperoxy)hexane, 3,6,9-triethyl-3,6,9-trimethyl-1,2,4,5,7,8-hexoxonane, or a representative of 3,6,9-trimethyl-3,6,9-tris(alkyl)-1,2,4,5,7,8-hexoxonanes in which the alkyl radical is propyl or ethyl.

5. The process of any of claims 2 to 4, wherein the organic free radical initiator is added in form of a mixture of the organic free radical initiator with a polyolefin powder.

6. The process of any of claims 1 to 5, wherein the polymerization catalyst is a Ziegler- or Ziegler-Natta-catalyst comprising the reaction product of an aluminum alkyl with a titanium compound supported on a magnesium halide.

7. The process of any of claims 1 to 6, wherein the mixing device is a paddle mixer comprising one or two horizontally orientated rotating shafts.

8. The process of any of claims 1 to 7, wherein the polyolefin powder is transferred from the mixing device to the extruder device by gravity.

9. The process of any of claims 1 to 8, wherein the polyolefin powder has been prepared in one or more gas-phase polymerization reactors.

10. The process of claim 9, wherein at least one of the gas-phase polymerization reactors is a multizone circulating reactor in which one polymerization zone is a riser, in which growing polymer particles flow upwards under fast fluidization or transport conditions, and the other polymerization zones are sub-zones of a downcomer, in which the growing polymer particles flow downward in a densified form, wherein the riser and the downcomer are interconnected and polymer particles leaving the riser enter the downcomer and polymer particles leaving the downcomer enter the riser, thus establishing a circulation of polymer particles through the riser and the downcomer.

11. The process of any of claims 1 to 10, wherein the polyolefin powder is obtained by polymerizing one or more 1-olefins in a cascade of at least two polymerization reactors.

12. The process of any of claims 1 to 11, wherein the polyolefin is a polyethylene.

13. The process of claim 12, wherein the polyethylene is a high density polyethylene having a density determined according to ISO 1183 at 23°C from 0.945 to 965 g/cm$^3$.

14. The process of any of claims 1 to 13, wherein the extruder device is a continuous mixer with counter rotating twin rotors or the extruder device comprises at least one co-rotating twin screw extruder.

Fig. 1

Europäisches
Patentamt

European
Patent Office

Office européen
des brevets

# EUROPEAN SEARCH REPORT

Application Number

EP 17 18 9027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/087564 A1 (BASELL POLYOLEFINE GMBH [DE]) 9 June 2016 (2016-06-09) | 1,2,5-14 | INV. B29B7/60 |
| A | * paragraphs [0001], [0007], [0020], [0025] - [0032], [0038], [0039], [0059], [0060], [0063] - [0066]; claims 1,5,12-14; figure 1 * | 3,4 | B29B9/00 B29C47/10 C08J3/20 C08J3/12 |
| X,D | WO 2016/087566 A1 (BASELL POLYOLEFINE GMBH [DE]) 9 June 2016 (2016-06-09) | 1,2,5-14 | |
| A | * paragraphs [0012] - [0017], [0029] - [0032], [0036]; claims 1,6,7,9-11,15 * | 3,4 | |
| A,D | WO 2005/019280 A1 (BASELL POLIOLEFINE SPA [IT]; MEIER GERBEN [DE]; COVEZZI MASSIMO [IT];) 3 March 2005 (2005-03-03) * claims 1-3,10,15,22,25 * | 9-13 | |
| X | WO 2008/033410 A1 (INGENIA POLYMERS INC [US]; D UVA SALVATORE [CA]; CHARLTON ZACH [US]; L) 20 March 2008 (2008-03-20) * paragraph [0051]; claims 12,14 * | 1 | |
| A,D | WO 2007/070121 A1 (EQUISTAR CHEM LP [US]) 21 June 2007 (2007-06-21) * claims * | 1 | TECHNICAL FIELDS SEARCHED (IPC) B29B B29C C08J |
| A | WO 2009/059967 A2 (TOTAL PETROCHEMICALS RES FELUY [BE]; DEWACHTER DAAN [BE]) 14 May 2009 (2009-05-14) * claims * | 1-14 | |
| A | WO 2006/023213 A1 (UNIVATION TECH LLC [US]; TUNNELL III HERBET [US]; SHANNON PORTER [US];) 2 March 2006 (2006-03-02) * paragraphs [0017], [0024] - [0035], [0046] - [0052]; claims * | 1-14 | |

-/--

The present search report has been drawn up for all claims

| Place of search | Date of completion of the search | Examiner |
|---|---|---|
| Munich | 16 February 2018 | Kanetakis, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/184812 A1 (BOREALIS AG [AT]) 24 November 2016 (2016-11-24) * page 24, line 22 - page 27, last line; claims; figures; tables * ----- | 1-14 | |

TECHNICAL FIELDS
SEARCHED      (IPC)

The present search report has been drawn up for all claims

| Place of search | Date of completion of the search | Examiner |
|---|---|---|
| Munich | 16 February 2018 | Kanetakis, Ioannis |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 18 9027

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2018

| Patent document cited in search report | Publication date | Patent family member(s) | Publication date |
|---|---|---|---|
| WO 2016087564 A1 | 09-06-2016 | CN 107000256 A | 01-08-2017 |
| | | CN 107000257 A | 01-08-2017 |
| | | EP 3186051 A1 | 05-07-2017 |
| | | EP 3186052 A1 | 05-07-2017 |
| | | JP 2017535650 A | 30-11-2017 |
| | | JP 2018502739 A | 01-02-2018 |
| | | KR 20170085107 A | 21-07-2017 |
| | | KR 20170086576 A | 26-07-2017 |
| | | US 2017259458 A1 | 14-09-2017 |
| | | US 2017341266 A1 | 30-11-2017 |
| | | WO 2016087564 A1 | 09-06-2016 |
| | | WO 2016087566 A1 | 09-06-2016 |
| WO 2016087566 A1 | 09-06-2016 | CN 107000256 A | 01-08-2017 |
| | | CN 107000257 A | 01-08-2017 |
| | | EP 3186051 A1 | 05-07-2017 |
| | | EP 3186052 A1 | 05-07-2017 |
| | | JP 2017535650 A | 30-11-2017 |
| | | JP 2018502739 A | 01-02-2018 |
| | | KR 20170085107 A | 21-07-2017 |
| | | KR 20170086576 A | 26-07-2017 |
| | | US 2017259458 A1 | 14-09-2017 |
| | | US 2017341266 A1 | 30-11-2017 |
| | | WO 2016087564 A1 | 09-06-2016 |
| | | WO 2016087566 A1 | 09-06-2016 |
| WO 2005019280 A1 | 03-03-2005 | AT 347569 T | 15-12-2006 |
| | | BR PI0413229 A | 03-10-2006 |
| | | CA 2551017 A1 | 03-03-2005 |
| | | CN 1867596 A | 22-11-2006 |
| | | DE 602004003590 T2 | 27-09-2007 |
| | | EP 1656398 A1 | 17-05-2006 |
| | | ES 2278326 T3 | 01-08-2007 |
| | | JP 4700610 B2 | 15-06-2011 |
| | | JP 2007502874 A | 15-02-2007 |
| | | KR 20060083412 A | 20-07-2006 |
| | | RU 2337925 C2 | 10-11-2008 |
| | | US 2007093621 A1 | 26-04-2007 |
| | | WO 2005019280 A1 | 03-03-2005 |
| WO 2008033410 A1 | 20-03-2008 | AT 551381 T | 15-04-2012 |
| | | BR PI0716835 A2 | 05-11-2013 |
| | | CA 2663432 A1 | 20-03-2008 |
| | | EP 2061831 A1 | 27-05-2009 |
| | | EP 2397510 A1 | 21-12-2011 |
| | | ES 2383549 T3 | 22-06-2012 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 17 18 9027

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2018

| Patent document cited in search report | Publication date | Patent family member(s) | | Publication date |
|---|---|---|---|---|
| | | ES | 2511068 T3 | 22-10-2014 |
| | | US | 2008076857 A1 | 27-03-2008 |
| | | WO | 2008033410 A1 | 20-03-2008 |
| WO 2007070121 A1 | 21-06-2007 | AT | 452150 T | 15-01-2010 |
| | | CA | 2632715 A1 | 21-06-2007 |
| | | CN | 101296951 A | 29-10-2008 |
| | | EP | 1969018 A1 | 17-09-2008 |
| | | ES | 2337403 T3 | 23-04-2010 |
| | | JP | 4955013 B2 | 20-06-2012 |
| | | JP | 2009519373 A | 14-05-2009 |
| | | KR | 20080074106 A | 12-08-2008 |
| | | US | 2007135584 A1 | 14-06-2007 |
| | | WO | 2007070121 A1 | 21-06-2007 |
| WO 2009059967 A2 | 14-05-2009 | AT | 519805 T | 15-08-2011 |
| | | DK | 2207839 T3 | 12-09-2011 |
| | | EP | 2058356 A1 | 13-05-2009 |
| | | EP | 2207839 A2 | 21-07-2010 |
| | | ES | 2369228 T3 | 28-11-2011 |
| | | KR | 20100076004 A | 05-07-2010 |
| | | PT | 2207839 E | 17-10-2011 |
| | | US | 2011015331 A1 | 20-01-2011 |
| | | WO | 2009059967 A2 | 14-05-2009 |
| WO 2006023213 A1 | 02-03-2006 | AU | 2005277807 A1 | 02-03-2006 |
| | | BR | PI0514491 A | 17-06-2008 |
| | | CA | 2577548 A1 | 02-03-2006 |
| | | CN | 101014631 A | 08-08-2007 |
| | | EP | 1778745 A1 | 02-05-2007 |
| | | KR | 20070055539 A | 30-05-2007 |
| | | US | 2006038315 A1 | 23-02-2006 |
| | | WO | 2006023213 A1 | 02-03-2006 |
| WO 2016184812 A1 | 24-11-2016 | CN | 107580611 A | 12-01-2018 |
| | | WO | 2016184812 A1 | 24-11-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004096523 A1
- WO 2016087566 A1
- WO 2005019280 A1
- WO 2007070121 A1
- WO 9704015 A1
- WO 0002929 A1
- US 5534472 A
- WO 2014202420 A1

**Non-patent literature cited in the description**

- **D. GELDART.** Gas Fluidization Technology. J. Wiley & Sons Ltd, 1986, 155
- Additives Handbook. 2001
- **R. SHROFF ; H. MAVRIDIS.** New Measures of Polydispersity from Rheological Data on Polymer Melts. *J. Applied Polymer Science,* 1995, vol. 57, 1605